# FASCICULE DE BREVET EUROPEEN

(11) **EP 3 840 143 B1**
(45) Date de publication et mention de la délivrance du brevet: **26.07.2023**
(21) Numéro de dépôt: 20211685.1
(22) Date de dépôt: 03.12.2020
(51) Int. Cl.: H02B 1/40, H02G 3/10

(54) **BOITE ÉLECTRIQUE À FIXER EN SAILLIE D'UN SUPPORT**
ELEKTROKASTEN ZUR BEFESTIGUNG AUF EINER OBERFLÄCHE EINES TRÄGERS
ELECTRIC BOX TO BE FIXED ON A SURFACE OF A SUPPORT

(30) Priorité: 20.12.2019 FR 1915129
(43) Date de publication de la demande: 23.06.2021
(73) Titulaire: Legrand France, 87000 Limoges (FR); Legrand SNC, 87000 Limoges (FR)
(72) Inventeur: BAUDOU, Alain, 87000 Limoges (FR)
(74) Mandataire: Jacobacci Coralis Harle

(56) Documents cités:
- EP-A1- 0 751 305
- EP-A1- 1 860 748
- FR-A1- 2 988 148

## Description

La présente invention concerne de manière générale le domaine des boîtes électriques, notamment des boîtes électriques isolantes prévues pour loger des mécanismes électriques (typiquement, des mécanismes de prise de courant ou d'interrupteur).

Elle concerne en particulier les boîtes électriques à rapporter en saillie sur des supports de réception, tels que des parois murales.

Elle concerne plus précisément une boîte électrique réalisée en matière plastique rigide comprenant une paroi de fond destinée à être fixée sur un support de réception, cette paroi de fond présentant sur une face externe au moins une zone d'appui sur ledit support de réception et étant traversée d'au moins un conduit destiné à accueillir un élément de fixation audit support de réception, chaque conduit présentant à une extrémité externe, une surface de pression sur ledit support de réception. On appelle surface de pression du conduit la surface par l'intermédiaire de laquelle le conduit prend appui contre le support de réception.

L'invention trouve une application particulièrement intéressante dans les boîtes électriques étanches.

Il existe déjà dans le commerce une boîte électrique telle que précitée, à fixer en saillie sur un support de réception, ladite boîte électrique présentant au moins deux points de contact distincts avec le support de réception : la zone d'appui et la surface de pression du conduit. Une telle boîte est par exemple décrite dans le document FR2988148. Pour fixer une telle boîte électrique sur le support, il est généralement prévu de visser deux vis de fixation au travers de deux conduits traversant la paroi de fond, jusque dans le support, de sorte que la boîte électrique présente alors au moins trois points de contact distincts avec le support de réception : la zone d'appui et la surface de pression de chacun des deux conduits.

Du fait des défauts de planéité du support sur lequel est fixée la boîte électrique, et du nombre de points de contact distincts au niveau desquels la boîte s'appuie contre le support, il arrive fréquemment que la paroi de fond d'une telle boîte soit déformée par l'effort exercé par la vis vissée dans le conduit et le support. Une telle déformation de la paroi de fond n'est pas souhaitable en général car elle fragilise la boîte et peut engendrer des problèmes au niveau du mécanisme qui y est intégré ainsi que des problèmes d'étanchéité dans le cas des boîtes électriques étanches.

Afin de remédier à l'inconvénient précité de l'état de la technique, la présente invention propose une boîte électrique dans laquelle le conduit est dissocié de la paroi de fond de manière qu'il soit seul à subir l'effort exercé par l'élément de fixation fixé dans ce conduit et dans le support de réception.

Plus particulièrement, on propose selon l'invention une boîte électrique selon la revendication 1.

Ainsi, dans la boîte électrique selon l'invention, le conduit reste lié mécaniquement à la paroi de fond par l'intermédiaire de l'enveloppe souple, ladite enveloppe souple autorisant, le cas échéant, le mouvement relatif dudit conduit par rapport à la paroi de fond, de sorte que lors de la fixation de la boîte électrique, la mise en appui de la surface de pression du conduit est dissociée de la mise en appui de la zone d'appui de la paroi de fond. Ce système de compensation des défauts de planéité du support de réception évite les déformations de la paroi de fond et, plus généralement, de l'ensemble de la boîte électrique, et garantit une meilleure étanchéité de celle-ci. Autrement dit, le mouvement relatif de translation de la surface de pression de chaque conduit par rapport à chaque zone d'appui de la paroi de fond évite de déformer la paroi de fond de la boîte électrique lorsque ladite paroi de fond entre en contact avec le support de réception en plusieurs points de contact distincts (la zone d'appui et la surface de pression de chaque conduit) au niveau desquels ledit support de réception ne présente pas la même profondeur.

D'autres caractéristiques non limitatives et avantageuses de la boîte électrique conforme à l'invention, prises individuellement ou selon toutes les combinaisons techniquement possibles, sont données dans les sous-revendications 2 à 14.

L'invention concerne aussi un boîtier selon la revendication 15.

L'invention concerne enfin un appareillage électrique selon la revendication 16.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

La description qui va suivre en regard des dessins annexés, donnés à titre d'exemples non limitatifs, fera bien comprendre en quoi consiste l'invention et comment elle peut être réalisée. Sur les dessins annexés :
- la figure 1 est une représentation schématique en vue avant de la platine-support d'une boîte électrique conforme à un premier mode de réalisation de l'invention ;
- la figure 2 est une représentation schématique en vue arrière de la platine-support de la figure 1;
- la figure 3 est une représentation schématique en coupe de la platine-support de la figure 1 ;
- la figure 4 est un schéma de principe, en coupe, de la paroi de fond d'une boîte électrique selon l'invention fixée sur un support de réception présentant un défaut de surface « en bosse » ;
- la figure 5 est un schéma de principe, en coupe, de la paroi de fond de la figure 4 fixée sur un support de réception présentant un défaut de surface « en creux » ;
- la figure 6 est une représentation schématique vue en arraché d'une partie de la platine-support de la figure 1 après une première étape d'un premier procédé de fabrication de cette platine-support ;
- la figure 7 est une représentation schématique vue en arraché de la partie de la platine-support représentée sur la figure 6 après une deuxième étape du premier procédé de fabrication ;
- la figure 8 est une représentation schématique vue en arraché illustrant la mobilité de la partie de la platine-support représentée sur la figure 7 ;
- la figure 9 est une représentation schématique, vue en arraché, d'une partie de la platine-support de la figure 1 après une première étape d'un deuxième procédé de fabrication de cette platine-support ;
- la figure 10 est une représentation schématique, vue en arraché, de la partie de platine-support représentée sur la figure 9 après une deuxième étape du deuxième procédé de fabrication ;
- la figure 11 est une représentation schématique en perspective d'un socle de platine-support d'une boîte électrique conforme à un deuxième mode de réalisation de l'invention ;
- la figure 12 est une représentation schématique en perspective zoomée de la zone Z de la figure 11;
- la figure 13 est une représentation schématique en perspective d'un conduit de platine-support destiné à être assemblé avec le socle de la figure 11 ;
- la figure 14 est une représentation schématique vue en coupe du conduit de la figure 13 assemblé avec le socle de la figure 11 et dont l'extrémité interne est fermée par un bouchon de protection ;
- la figure 15 est une représentation schématique en perspective éclatée d'une portion de platine-support d'une boîte électrique conforme à un troisième mode de réalisation de l'invention ;
- la figure 16 est une représentation schématique en perspective éclatée d'une portion de platine-support d'une boîte électrique conforme à un quatrième mode de réalisation de l'invention ;
- la figure 17 est une représentation schématique en coupe de la portion de platine-support assemblée de la figure 16 ;
- la figure 18 est une représentation schématique en perspective éclatée, vue en arraché, d'une portion de platine-support d'une boîte électrique conforme à un cinquième mode de réalisation de l'invention ;
- la figure 19 est une représentation schématique en coupe de la portion de platine-support assemblée de la figure 18 ;
- la figure 20 est une vue schématique en perspective éclatée d'un appareillage électrique comportant une boîte électrique conforme au premier mode de réalisation de l'invention, un mécanisme de prise de courant et un enjoliveur associé ; et,
- la figure 21 est une vue schématique en perspective éclatée d'un appareillage électrique comportant une boîte électrique conforme au premier mode de réalisation de l'invention, un mécanisme d'interrupteur et un enjoliveur associé.

En préliminaire, on notera que les éléments identiques ou similaires des différents modes de réalisation de l'invention représentés sur les différentes figures seront, dans la mesure du possible, référencés par les mêmes signes de référence et ne seront pas décrits à chaque fois.

Par convention, les termes « avant » et « arrière » sont utilisés par rapport à la direction du regard de l'utilisateur tourné vers la boîte électrique rapportée sur le support de réception. Ainsi, l'avant d'un élément désigne le côté de cet élément qui est tourné vers l'utilisateur, tandis que l'arrière désigne le côté opposé. Autrement dit, lorsque le support de réception de la boîte électrique est la paroi murale d'une pièce, l'avant d'un élément désigne le côté de cet élément tourné vers l'intérieur de la pièce et l'arrière désigne le côté de cet élément tourné vers la paroi murale. Les termes « intérieur » (ou « interne ») et « extérieur » (ou « externe ») sont quant à eux utilisés par rapport à la boîte électrique elle-même, pour désigner respectivement le côté d'un élément tourné vers le centre de la boîte électrique et le côté d'un élément tourné vers l'extérieur de cette boîte.

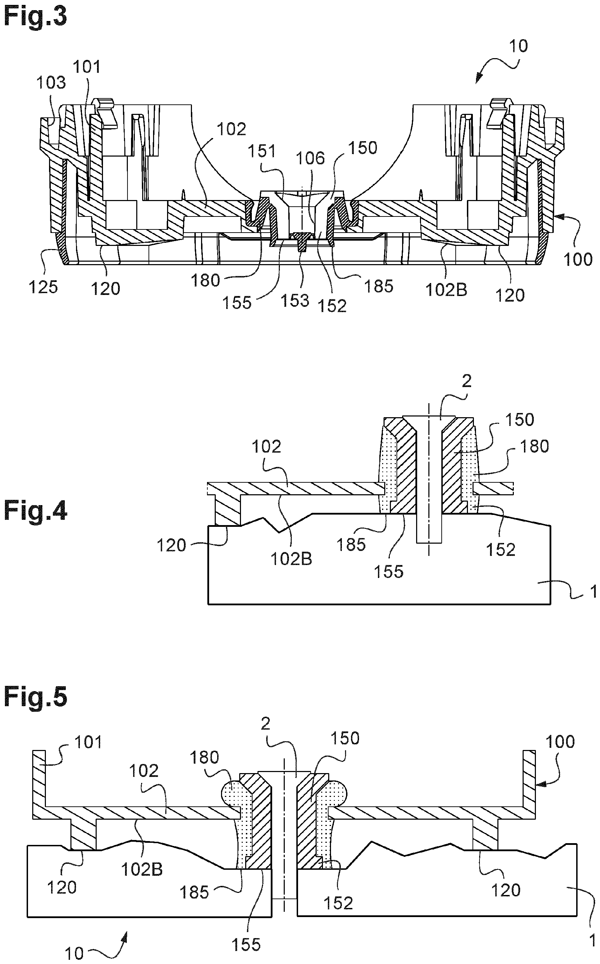

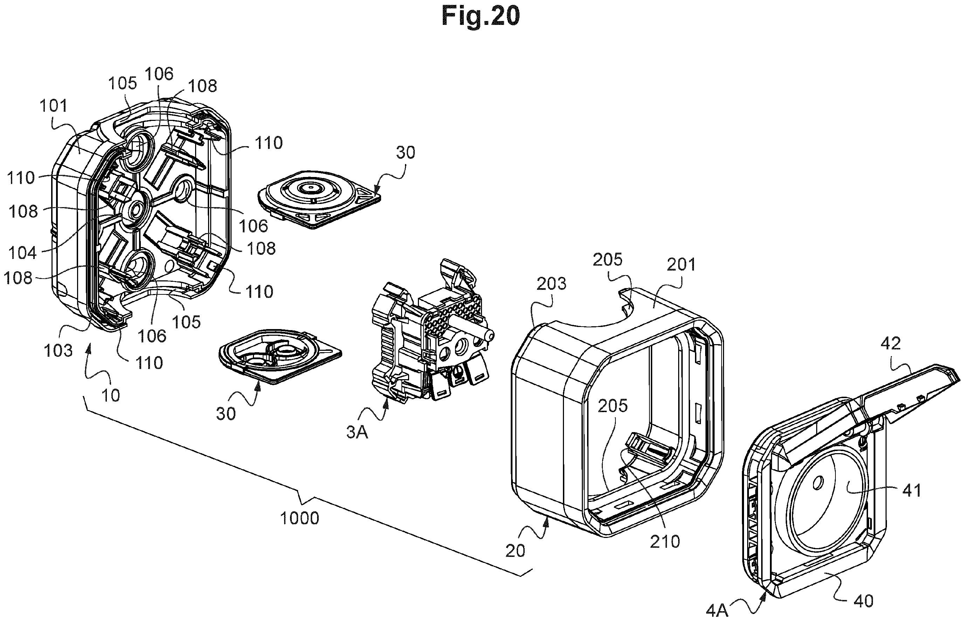

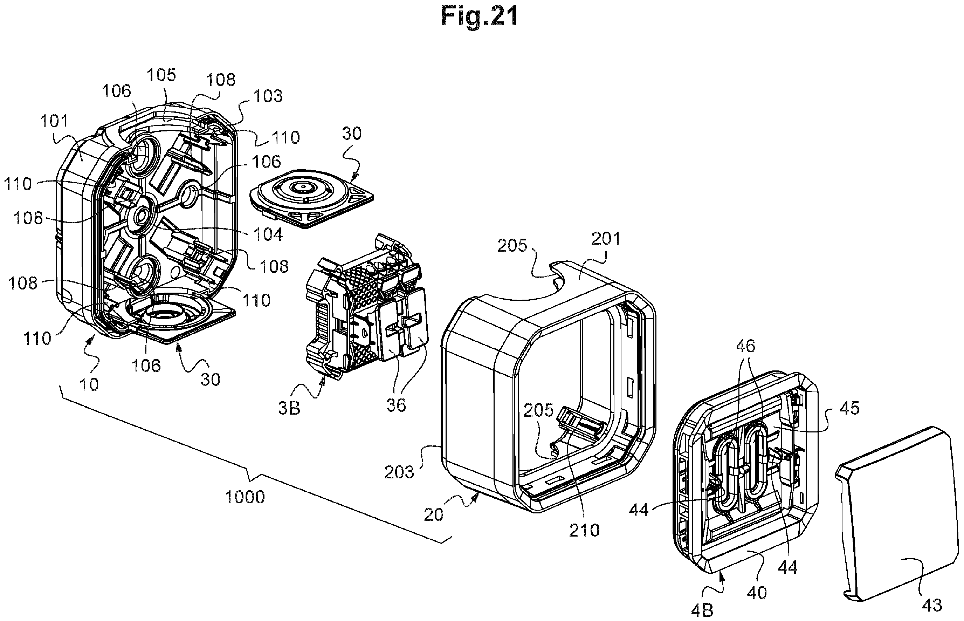

On a représenté sur les figures 20 et 21 une boîte électrique 1000 selon l'invention, qui est ici une boîte électrique étanche à rapporter en saillie sur un support de réception 1 (représenté sur les figures 4 et 5), par exemple sur une paroi murale, un étrier ou tout autre support. La boîte électrique 1000 est ici agencée pour recevoir intérieurement un mécanisme d'appareillage électrique tel qu'un mécanisme de prise de courant 3A (figure 20) ou un mécanisme d'interrupteur 3B (figure 21), ou encore un mécanisme de détection (non représenté). Il est prévu de fixer à l'avant de cette boîte électrique un enjoliveur 4A, 4B qui ferme la boîte électrique 1000 et dont la forme est associée au mécanisme d'appareillage 3A, 3B monté dans la boîte électrique 1000.

La boîte électrique 1000 selon l'invention est réalisée en matière plastique isolante, par exemple par moulage des différentes pièces la constituant. Les termes « matière » et « matériau » sont synonymes et utilisés indifféremment dans la suite de la description.

Comme le montrent les figures 20 et 21, la boîte électrique 1000 selon l'invention présente ici un corps qui comporte d'une part, une partie arrière formée par une platine-support 10, et, d'autre part, une partie avant qui se présente ici classiquement sous la forme d'un cadre 20 destiné à être rapporté sur cette platine-support 10. Le cadre 20 du corps de la boîte électrique 1000 rapporté sur la platine-support 10 forme une rehausse à cette dernière.

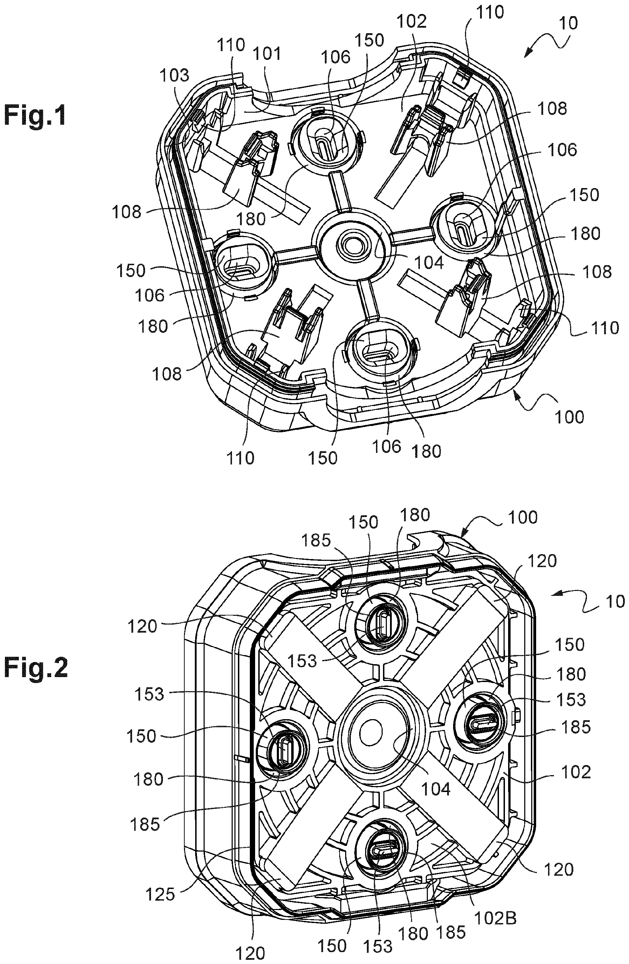

Comme le montrent les figures 20 et 21, le bord avant de la platine-support 10 de la boîte électrique 1000 présente ici une forme de gorge 103 (voir aussi figures 1 et 3) destinée à recevoir par emboîtement une languette 203 correspondante formée sur le bord arrière du cadre 20 du corps de la boîte électrique 1000. Une fois le cadre 20 et la platine-support 10 emboîtés l'un sur l'autre, la paroi latérale 201 du cadre 20 s'étend dans le prolongement de la paroi latérale 101 de la platine-support 10. Pour la fixation du cadre 20 sur la platine-support 10, ladite platine-support 10 comporte aussi, dans chacun de ses angles, des moyens d'attache 110 au cadre 20 (voir aussi figure 1), et le cadre 20 comporte des moyens d'attache 210 complémentaires (voir figures 20 et 21).

Comme le montrent les figures 20 et 21, à la fois le bord avant de la paroi latérale 101 de la platine-support 10 recevant le cadre 20 et le bord arrière du cadre 20, sont chacun interrompus, sur deux pans opposés, par des renfoncements 105, 205 destinés à recevoir deux embouts 30 d'entrée de câbles pour le passage d'une gaine électrique de type ICTA ou d'un tube de type IRL ou encore d'un câble électrique amenant des fils électriques à l'intérieur de la boîte électrique 1000 pour l'alimentation du mécanisme d'appareillage 3A, 3B qui y est logé.

La platine-support 10 de la boîte électrique 1000 est plus précisément prévue pour, d'une part, être fixée au support de réception 1 via des orifices spécifiques 106 (voir figures 1, 20 et 21), et, d'autre part, supporter le mécanisme d'appareillage 3A, 3B via des moyens de montage 108 (voir figures 1, 20 et 21). Il est aussi prévu, dans la paroi de fond de la platine-support 10, une ouverture centrale 104, ici fermée par un opercule d'étanchéité déchirable (voir figures 1, 2, 20 et 21). Cette ouverture centrale 104 est aussi destinée au passage éventuel d'une gaine électrique de type ICTA ou d'un tube de type IRL ou encore d'un câble électrique (par exemple de type U1000RO2V ou HO7RNF) amenant des fils électriques à l'intérieur de la boîte électrique 1000 pour l'alimentation du mécanisme d'appareillage 3A, 3B qui y est logé.

Comme le montrent les figures 20 et 21, le cadre 20 a, quant à lui, à la fois une fonction de protection du mécanisme d'appareillage 3A, 3B et une fonction de support de l'enjoliveur 4A, 4B. Plus précisément, le cadre 20 est conçu pour être fermé à l'avant par l'enjoliveur 4A, 4B. Ainsi, le corps de la boîte électrique 1000 formé par la platine support 10 réhaussée du cadre 20, est fermé à l'avant par l'enjoliveur 4A, 4B de manière à former un boîtier électrique.

L'enjoliveur 4A, 4B comporte des moyens d'interface 41, 42, 43 permettant à l'usager d'interagir avec le mécanisme d'appareillage 3A, 3B.

Ainsi, sur la figure 20, l'enjoliveur 4A comporte, à l'intérieur d'une partie structurelle 40 en forme de cadre, un puits 41 de réception d'une fiche électrique. Il porte en outre un capot rabattable 42 de protection du puits 41.

Sur la figure 21, l'enjoliveur 4B comporte quant à lui une touche de commande 43 adaptée à s'encliqueter sur des moyens de réception 44 prévus sur une paroi 45 qui ferme la partie structurelle 40 en forme de cadre. Ces moyens de réception 44 sont prévus pour offrir à la touche de commande 43 une mobilité en basculement. On observe ici que la paroi 45 présente deux fenêtres oblongues fermées par des plaquettes rigides 46 qui sont raccordées aux bords de ces fenêtres oblongues par des membranes souples d'étanchéité. Ces plaquettes rigides 46 sont ainsi adaptées à basculer par rapport à la paroi 45 lorsque des tétons prévus à l'arrière de la touche de commande 43 viennent appuyer dessus, ce qui leur permet de faire basculer à leur tour des entraîneurs 36 du mécanisme d'interrupteur 3B. Ainsi, le mécanisme d'interrupteur 3B peut commuter à la faveur du basculement de la touche de commande 43.

Bien entendu selon un autre mode de réalisation non représenté de la boîte électrique conforme à l'invention, on pourrait prévoir que celle-ci ne soit pas constituée en deux parties (arrière et avant) assemblées l'une à l'autre, mais comprenne classiquement, en une seule partie, une paroi de fond à partir de laquelle s'élève une paroi latérale globalement perpendiculaire au plan de ladite paroi de fond. L'enjoliveur serait alors fixé à l'avant de la paroi latérale pour fermer la boîte électrique et former le boîtier électrique.

Sur les figures 1, 11, 15, 16 et 18, on a représenté tout ou partie de la platine-support 10 de cinq modes de réalisation d'une boîte électrique selon l'invention, lesdits cinq modes de réalisation de la boîte électrique différant entre eux par leur platine-support 10 respective.

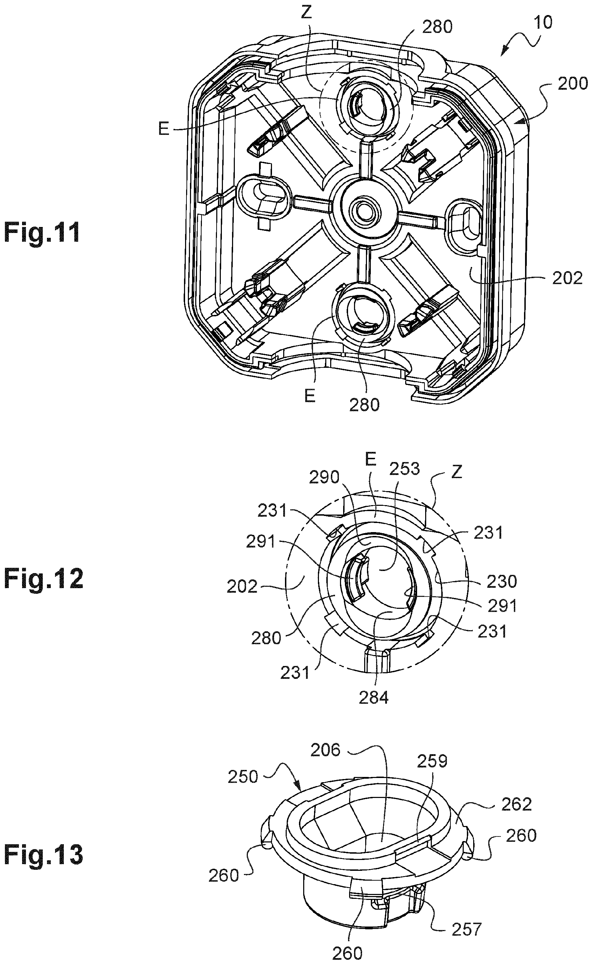

La platine-support 10 associée au premier mode de réalisation de la boîte électrique selon l'invention est décrite en détail en référence aux figures 1 à 3, ainsi qu'en référence aux schémas de principe des figures 4 et 5. La platine-support 10 des autres modes de réalisation de la boîte électrique selon l'invention est décrite en référence aux figures 11 à 19, en explicitant les différences avec ce premier mode de réalisation et les autres modes de réalisation successifs.

Selon le premier mode de réalisation de la boîte électrique conforme à l'invention, représenté sur la figure 1, la platine-support 10 comporte un socle 100, au moins un conduit 150 traversant une paroi de fond 102 de ce socle 100 et délimitant intérieurement un desdits orifices spécifiques 106 servant à la fixation de la boîte électrique sur le support, ainsi qu'une enveloppe 180 en matière souple s'interposant entre ladite paroi de fond 102 du socle 100 et le conduit 150.

On comprend ici que la paroi de fond 102 du socle 100 de la platine-support 10 constitue la paroi de fond de la boîte électrique selon l'invention, par laquelle elle va reposer sur le support de réception 1 et être fixée à ce support. Ainsi, dans la suite de la description, on désigne indifféremment par la référence 102 la paroi de fond du socle, la paroi de fond de la platine-support ou la paroi de fond de la boîte électrique.

De manière remarquable, comme il sera expliqué plus en détails ci-après, l'enveloppe 180 en matière souple autorise un déplacement relatif entre chaque conduit 150 et la paroi de fond 102 du socle 100 de sorte qu'une surface de pression 155 externe du conduit 150 est autorisée à se translater par rapport à une zone d'appui 120 prévue sur une face externe 102B de la paroi de fond 102 du socle 100, sans engendrer de contrainte mécanique déformant ladite paroi de fond 102 (voir figure 3).

Le socle 100 se présente ici sous une forme générale parallélépipédique (voir figures 1 et 2). Bien entendu, ce socle pourrait présenter une forme différente, notamment cylindrique. Le socle 100 est ouvert à l'avant, et comporte la paroi de fond 102, globalement carrée, bordée par une paroi latérale 101 qui s'élève à partir de cette paroi de fond 102, sensiblement perpendiculairement à celle-ci (voir figures 1 et 2). La paroi latérale 101 suit aussi un contour globalement carré (voir figure 1). Le socle 100 est ici réalisé en matière plastique rigide, par exemple par moulage.

La zone d'appui 120 de la paroi de fond 102 du socle 100 est prévue sur la face externe 102B de ladite paroi de fond 102 (voir figure 2). Cette zone d'appui 120 est destinée à venir contre la surface du support de réception 1 lorsque la boîte électrique y est fixée (voir figures 4 et 5). Comme le montre plus précisément la figure 2, il est prévu une zone d'appui 120 dans chacun des angles de la face externe 102B de la paroi de fond 102. Chaque zone d'appui 120 est formée par un relief, ici se présentant sous la forme d'une rampe inclinée, disposée selon une diagonale du carré de la paroi de fond 102. Chaque rampe est inclinée en direction du centre de la paroi de fond 102, la portion périphérique de chaque rampe étant en saillie vers l'arrière par rapport à la portion centrale de la rampe. Cette forme de rampe permet au socle 100 de pouvoir épouser des surfaces de réception bombées. Ici, c'est la portion périphérique en saillie de chaque rampe qui forme chaque zone d'appui 120. Les zones d'appui 120 permettent de localiser les contacts entre la paroi de fond 102 et la surface du support de réception 1. Les quatre zones d'appui 120 réparties sur la face externe 102B de la paroi de fond 102 assurent ici la stabilité de la boîte électrique fixée audit support de réception 1. En variante, chaque zone d'appui pourrait être formée par un relief quelconque prévu sur la face externe de la paroi de fond du socle, ce relief quelconque étant de préférence intercalé entre deux surfaces d'appui des conduits, de préférence encore de façon symétrique par rapport au centre de la paroi de fond.

Comme le montrent les figures 1 à 5, ledit au moins un conduit 150 traversant la paroi de fond 102 du socle 100 délimite intérieurement un desdits orifices spécifiques 106 dédiés à la fixation de la platine-support 10 de la boîte électrique au support de réception 1. Ce conduit 150 est destiné à accueillir un élément de fixation, par exemple une vis de fixation 2, pour la fixation de la platine-support 10 sur le support de réception 1. Le conduit 150 est ici réalisé en matière plastique rigide, par exemple par moulage. De manière classique, l'extrémité interne 151 de ce conduit 150 est ici évasé et définit intérieurement un logement destiné à recevoir la tête de vis (voir figure 3). Ce logement est dimensionné pour résister aux efforts de pression exercés par ladite tête de vis lors du serrage de la vis de fixation 2 dans le support de réception 1. Le conduit 150 agit ainsi comme une entretoise de serrage entre la vis de fixation 2 et le support de réception 1.

De manière préférentielle, la paroi de fond 102 du socle 100 comporte au moins deux conduits 150 disposés de manière symétrique par rapport au centre de ladite paroi de fond 102, de manière que la boîte électrique fixée au support de réception 1 par ces deux conduits 150 soit plus stable que lorsqu'elle n'est fixée que par un seul conduit 150. Ici, comme le montrent les figures 1 et 2, la paroi de fond 102 du socle 100 est plus précisément traversée par quatre conduits 150 disposés de manière symétrique par rapport au centre de la paroi de fond 102 de la boîte électrique. Chaque conduit 150 délimite intérieurement un orifice spécifique 106 de fixation de la boîte électrique. La boîte électrique, généralement fixée par seulement deux de ces conduits 150 choisis symétriques par rapport au centre de la paroi de fond 102, présente ainsi plus de possibilités de fixation au support de réception 1, sans que cette fixation lui impose une orientation particulière.

Comme le montre la figure 1, chacun des deux conduits 150 opposés par rapport au centre de la paroi de fond 102 délimite intérieurement l'un des orifices spécifiques 106 de section oblongue, les directions principales de ces sections oblongues étant orientées à 90° l'une de l'autre. Cette configuration permet un rattrapage des éventuels défauts de positionnement des trous réalisés dans le support de réception 1 et destinés à recevoir les vis de fixation 2.

Comme le montrent les figures 3 à 5, la surface de pression 155 de chaque conduit 150 est prévue à une extrémité externe 152 dudit conduit 150, située du côté de la face externe 102B de la paroi de fond 102. Cette surface de pression 155 présente ici une forme annulaire dont le contour externe est circulaire et le contour interne est oblong. La surface de pression 155 est destinée à venir s'appuyer contre la surface du support de réception 1 lors du serrage de la vis de fixation 2 introduite dans le conduit 150 et dans le trou correspondant du support de réception 1 (voir figures 4 et 5). Comme il sera détaillé ensuite, l'appui de la surface de pression 155 contre le support de fixation peut être direct ou indirect selon qu'un élément s'interpose ou non entre le support et ladite surface de pression 155. La surface de pression 155 de chaque conduit 150 est distincte de chaque zone d'appui 120 de la paroi de fond 102 du socle 100 de la platine-support 10.

Ici, chaque conduit 150 est entouré par sa propre enveloppe 180 souple, de sorte que les déplacements des conduits 150 sont tous indépendants les uns des autres.

Comme le montre la figure 5, sous l'effort de serrage de la vis de fixation 2 dans le support de réception 1, via le conduit 150 correspondant, l'enveloppe 180 souple entourant ledit conduit 150 peut se déformer, le cas échéant, pour permettre à la surface de pression 155 dudit conduit 150 de venir en appui contre la surface correspondante du support de réception 1, sans déformer la paroi de fond 102 et tout en garantissant que les zones d'appui 120 de la face externe 102B de ladite paroi de fond 102 sont elles-mêmes en appui contre une surface correspondante du support de réception 1. Autrement dit, l'enveloppe 180 souple garantit que les contraintes de serrage exercées par la vis de fixation 2 dans le support de réception 1 sont localisées au niveau des conduits 150 de la platine-support 10 de la boîte électrique et ne se transmettent pas à l'ensemble du socle 100 de ladite platine-support 10. L'enveloppe 180 souple, adaptée à se déformer sous cette contrainte, en particulier à se comprimer, est notamment utile pour compenser les défauts de planéité du support de réception 1 dits « en creux », c'est-à-dire lorsque la surface de pression 155 du conduit 150 est disposée en regard d'un creux du support de réception 1 tandis que la zone d'appui 120 de la paroi de fond 102 est disposée en regard d'une bosse (figure 5).

La paroi de fond 102 de la boîte électrique conforme à l'invention peut ainsi s'adapter aux déformations du support de réception 1 sans engendrer de déformation de cette boîte, ce qui ici garantit un meilleur assemblage du cadre sur la platine-support 10. Cela améliore la résistance de la boîte électrique et, dans le cas présent, son étanchéité.

Comme le montre la figure 3, avant la fixation de la boîte électrique sur le support de réception 1, la surface de pression 155 de chaque conduit 150 est ici avantageusement située en retrait de chaque zone d'appui 120 de la face externe 102B de la paroi de fond 102 du socle 100. En d'autres termes, la surface de pression 155 de chaque conduit 150 est située en avant par rapport aux zones d'appui 120 de la paroi de fond 102, de telle sorte que lorsque la boîte électrique repose sur une surface plane, sans être fixée à cette dernière, seule les zones d'appui 120 de la paroi de fond 102 sont en contact avec ladite surface plane, la surface de pression 155 de chaque conduit 150 restant à distance de ladite surface plane. Comme le montre la figure 4, cette configuration avantageuse permet de compenser certains défauts de planéité du support de réception 1, notamment des défauts « en bosse », sans contraindre l'enveloppe 180 souple. Ainsi, lorsque la surface de pression 155 du conduit 150 est disposée en regard d'une bosse du support de fixation 1, et que la zone d'appui 120 de la paroi de fond 102 est disposée en regard d'un creux de ce support de réception 1, la fixation de la vis de fixation 2 dans le trou correspondant du support de réception 1 est réalisée sans solliciter de déformation de l'enveloppe 180 souple (voir figure 4).

Bien entendu, il est possible d'ajuster l'écart matérialisant le retrait entre la surface de pression 155 de chaque conduit 150 et chaque zone d'appui 120 de la paroi de fond 102, en fonction des défauts de planéité du support de réception 1 que la boîte électrique doit être capable de compenser.

Selon le premier mode de réalisation de la boîte électrique conforme à l'invention, chaque enveloppe 180 de la platine-support 10 est surmoulée sur le conduit 150 correspondant et la paroi de fond 102 du socle 100. Ici, chaque conduit 150 et la paroi de fond 102 du socle 100 de la platine-support 10 sont d'ailleurs issus d'une même opération de moulage, par exemple un moulage bi-matière.

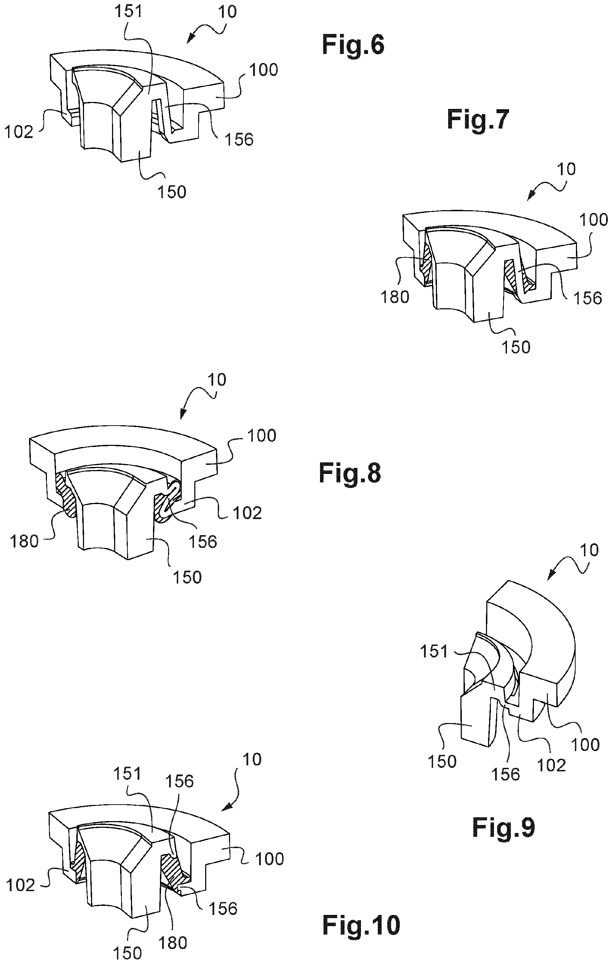

Les figures 6 à 10 illustrent plus précisément différentes étapes de deux procédés de fabrication de la boîte électrique conforme à l'invention, et plus particulièrement de la platine-support 10 de cette boîte électrique, le cadre de la boîte électrique étant moulé séparément. Dans ces deux procédés de fabrication, au cours d'une première étape, représentée respectivement sur les figures 6 et 9, chaque conduit 150 et le socle 100 de la platine-support 10 de la boîte électrique sont moulés conjointement dans une même matière plastique rigide, à partir d'un unique moule de fabrication.

Plus précisément, dans la première étape du premier procédé de fabrication, représentée sur la figure 6, l'emplacement de chaque conduit 150 dans le moule est tel que l'extrémité interne 151 de ce conduit 150 est située dans sa position finale, en avant par rapport à la portion la plus basse de la face interne de la paroi de fond 102 du socle 100. Au contraire, dans la première étape du deuxième procédé de moulage, représentée sur la figure 9, l'emplacement de chaque conduit 150 dans le moule est tel que son extrémité interne 151 est située au même niveau que la portion la plus basse de la face interne de la paroi de fond 102 du socle 100. L'opération de moulage est facilitée dans ce deuxième procédé de fabrication car la matière plastique injectée peut s'écouler plus facilement dans le moule pour remplir l'emplacement du conduit.

Dans les deux cas, à l'issu de la première étape de moulage, il existe un lien physique 156 entre le socle 100 et le conduit 150, ce lien physique 156 attestant de la présence d'un canal dans le moule utilisé, par lequel la matière plastique a pu rejoindre l'emplacement du conduit (voir figures 6 et 9).

Dans une deuxième étape des deux procédés de fabrication, représentée sur les figures 7 et 10, chaque enveloppe 180 est surmoulée entre le conduit 150 correspondant et le socle 100.

Ici, chaque enveloppe 180 souple entourant chaque conduit 150 est réalisée en un matériau élastomère de type thermoplastique tel que le SEBS (acronyme de Styrene Ethylbutylene Styrene). Ce matériau, couplé à la dimension et à la forme de l'enveloppe 180 souple, garantit des propriétés idéales à l'enveloppe 180, en termes d'élasticité pour autoriser sa déformation, et de résistance mécanique pour empêcher sa rupture lors d'un effort de fixation. Ce matériau et le dimensionnement de l'enveloppe 180 garantissent aussi une liaison mécanique suffisante entre le conduit 150 et la paroi de fond 102 du socle 100 de la boîte électrique et évitent ainsi une séparation de ces deux pièces, en particulier lors d'un effort d'arrachement de la boîte électrique fixée au support de réception 1. Bien entendu, il est possible d'adapter le matériau et le dimensionnement de l'enveloppe 180, en fonction des défauts de planéité du support de réception 1 que la boîte électrique doit être capable de compenser.

Dans la deuxième étape du premier procédé de fabrication, représentée sur la figure 7, le lien physique 156 est entièrement noyé dans l'enveloppe 180 souple. Selon une variante non représentée, il est envisageable que le lien physique reste apparent depuis l'intérieur de la platine-support, sans être totalement noyé dans l'enveloppe souple. Quoiqu'il en soit, comme le montre la figure 8, le lien physique 156 obtenu selon le premier procédé de fabrication est de section suffisamment faible pour pouvoir être déformé conjointement à l'enveloppe 180 souple, le cas échéant, lors du déplacement du conduit 150 par rapport à la paroi de fond 102 du socle 100 (voir figure 8).

Dans la deuxième étape du deuxième procédé de fabrication, représentée sur la figure 10, le lien physique 156 est rompu et le conduit 150 est avancé par rapport à la paroi de fond 102 du socle 100 à l'aide d'une broche, jusqu'à ce que l'extrémité interne 151 du conduit 150 soit située à sa position finale, c'est-à-dire à distance de la portion la plus basse de la face interne de la paroi de fond 102 du socle 100. L'enveloppe 180 souple est ensuite surmoulée entre l'extrémité interne 151 du conduit 150 et la paroi de fond 102 du socle 100. Les marques de cassure du lien physique 156 rompu sont visibles sur la paroi de fond 102 obtenue selon ce deuxième procédé de fabrication.

En sus de relier mécaniquement chaque conduit 150 à la paroi de fond 102 du socle 100, l'enveloppe 180 souple les relie de manière étanche. Cela empêche toute pénétration d'humidité à l'intérieur de la boîte électrique par l'espace séparant ledit conduit 150 de ladite paroi de fond 102, cet espace étant entièrement comblé par ladite enveloppe 180 souple.

En outre, comme le montrent les figures 2 à 5, il est prévu à proximité de l'extrémité externe 152 de chaque conduit 150 un joint d'étanchéité 185, ici réalisé en matière souple, destiné à être écrasé contre le support de réception 1 lors de la fixation de la boîte électrique par l'intermédiaire du conduit 150 correspondant. Ce joint d'étanchéité 185 présente la forme d'une lèvre qui s'étend vers l'arrière à partir de la surface de pression 155 de chaque conduit 150. Ici, le joint d'étanchéité 185 borde extérieurement la surface de pression 155 du conduit 150. Le joint d'étanchéité 185 présente ainsi une forme globalement annulaire aux contours interne et externe circulaires. Ici, l'extrémité libre du joint d'étanchéité 185 est disposée dans le même plan que les zones d'appui 120 de la paroi de fond 102, avant la fixation de la platine-support 10 de la boîte électrique (voir figure 3). La lèvre formant le joint d'étanchéité 185 est suffisamment souple pour être écrasée de manière à épouser les défauts du support de réception 1 lorsque la boîte électrique est fixée audit support de réception 1. Le joint d'étanchéité 185 associé à chaque conduit 150 renforce ainsi l'étanchéité globale de la boîte électrique en évitant que de l'humidité puisse pénétrer à l'intérieur de la boîte électrique via l'orifice spécifique 106 délimité par le conduit 150, puisque le joint d'étanchéité 185 empêche l'humidité de pénétrer entre la surface de pression 155 du conduit 150 et le support de réception 1.

Comme le montre la figure 3, l'enveloppe 180 et le joint d'étanchéité 185 sont ici réalisés par une même opération de moulage, de sorte qu'ils sont formés d'une seule pièce.

Comme le montrent les figures 2 et 3, il est aussi prévu, sur toute la périphérie de la face externe 102B de la paroi de fond 102 du socle 100, c'est-à-dire le long du bord périphérique de ladite face externe 102B, une jupe 125 formant une surface de contact de la boîte électrique sur le support de réception 1. Cette jupe 125 est ici réalisée en matériau souple, par exemple en matériau élastomère, et prend la forme d'une lèvre bordant la face externe 102B de la paroi de fond 102. Elle est suffisamment souple pour être écrasée contre le support de réception 1 lorsque la boîte électrique est fixée audit support de réception. Cet écrasement de la jupe 125 masque en partie les défauts de planéité du support de réception, puisque la jupe épouse la forme de ces défauts. En outre, d'une manière analogue au joint d'étanchéité porté à l'extrémité externe 152 de chaque conduit 150, la jupe 125 renforce l'étanchéité de la boîte électrique en évitant que de l'humidité puisse pénétrer entre la face externe 102B de sa paroi de fond 102 et le support de réception 1. Une telle jupe 125 est par exemple réalisée en matériau SEBS.

Comme le montrent les figures 2 et 3, chaque conduit 150 est fermé à son extrémité externe 152 par un opercule 153 d'étanchéité en matériau déchirable ou perçable. Cet opercule 153 peut lui aussi être réalisé en matériau SEBS. Il est possible de visser la vis de fixation 2 ou d'insérer un élément de fixation quelconque au travers de cet opercule 153 pour fixer la boîte électrique sur le support de réception 1. Lorsque le conduit 150 n'est pas utilisé pour la fixation de la boîte électrique, cet opercule 153 maintient l'extrémité externe 152 du conduit 150 fermée, ce qui renforce l'étanchéité de la boîte électrique.

Sur les figures 11 à 14, on a représenté un deuxième mode de réalisation de la boîte électrique conforme à l'invention. La platine-support 10 de la boîte électrique selon ce deuxième mode de réalisation est semblable à celle de la boîte électrique selon le premier mode de réalisation décrit dans la mesure où elle comporte un socle 200 dont une paroi de fond 202 est traversée par des conduits 250 délimitant des orifices spécifiques 206 destinés à la fixation de ladite platine-support 10, et où une enveloppe 280 souple s'interpose entre chaque conduit 250 et ladite paroi de fond 202 du socle 200. La différence principale entre les platine-support 10 des boîtes électriques selon les premier et deuxième modes de réalisation réside dans le fait que le socle 200 et chaque conduit 250 de la platine-support 10 de la boîte électrique selon le deuxième mode de réalisation sont moulés séparément. Ainsi, le conduit 250 peut être réalisé dans une matière plastique présentant des caractéristiques mécaniques différentes de celles du socle 200, notamment une meilleure résistance mécanique. En outre, prévoir de mouler séparément chaque conduit 250 et le socle 200 de la platine support 10 autorise une complexification de la forme du conduit 250 de manière à y incorporer des fonctions supplémentaires.

Selon ce deuxième mode de réalisation, chaque enveloppe 280 de la platine-support 10 appartient à la paroi de fond 202 du socle 200 de la platine-support 10, c'est-à-dire que chaque enveloppe 280 est surmoulée sur la paroi de fond 202 de manière que ladite paroi de fond 202 et l'enveloppe 280 sont d'une seule pièce, bi-matière. La pièce comportant la paroi de fond et l'enveloppe peut éventuellement être formée de plus de deux matières si la paroi de fond est elle-même formée de plusieurs matières différentes. Le conduit 250 est ensuite rapporté sur la paroi de fond 202 du socle 200 de la platine-support 10, de manière que l'enveloppe 280 s'interpose entre ledit conduit 250 et la paroi de fond 202 du socle 200.

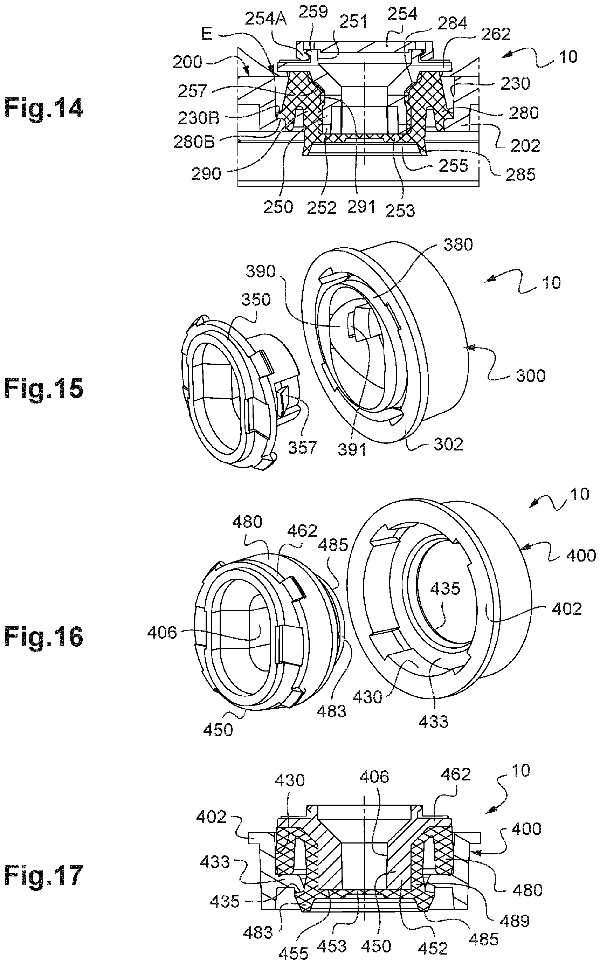

Plus précisément, comme le montre la figure 11, le socle 200 comporte des emplacements, ici deux emplacements E disposés symétriquement par rapport au centre de la paroi de fond 202, chacun destiné à recevoir un conduit 250 tel que celui représenté sur la figure 13. Comme le montrent plus précisément les figures 12 et 14, chaque emplacement E est ici formé par une ouverture 230 circulaire traversant de part en part la paroi de fond 202 du socle 200. Un manchon 290 en matériau souple, par exemple en matériau SEBS, est logé à l'intérieur de chaque ouverture 230.

Ici, chaque manchon 290 est surmoulé d'une seule pièce dans l'emplacement E correspondant, c'est-à-dire que le manchon 290 vient de formation avec la paroi de fond 202 du socle 200. Comme le montrent les figures 12 et 14, chaque manchon 290 présente une forme cylindrique. Chaque manchon 290 est ouvert à son extrémité avant et fermé à son extrémité arrière par un opercule 253 déchirable. Ce manchon 290 délimite intérieurement une cavité 284 de section globalement circulaire, destinée à recevoir le conduit 250 (voir figures 12 et 14). Chaque manchon 290 est muni à cet effet de moyens d'accrochage destinés à coopérer à retenue avec des moyens d'accrochage complémentaires prévus sur chaque conduit 250. Ici, la paroi latérale du manchon 290 porte intérieurement deux dents d'accrochage 291, en vis-à-vis par rapport à un diamètre de la section circulaire formée par la cavité 284 du manchon 290. La surface d'accroche de ces dents d'accrochage 291 est perpendiculaire à la direction d'introduction du conduit 250 dans la cavité 284 du manchon 290. Les dents d'accrochage 291 font saillie l'une vers l'autre globalement à mi-hauteur de la cavité 284 délimitée par le manchon 290 (voir figures 12 et 14).

Le manchon 290 porte, à son extrémité avant, une couronne qui forme l'enveloppe 280 souple s'interposant entre le conduit 250 et la paroi de fond 202 du socle 200 (voir figure 14). Cette couronne s'étend plus précisément à l'extérieur de la cavité 284 délimitée intérieurement par ledit manchon 290. Le bord arrière 280B de la couronne repose sur un trottoir 230B faisant saillie dans l'ouverture 230 du socle 200 (voir figure 14). En dehors de la jonction entre le trottoir 230B et le bord arrière 280B de la couronne, la section de la couronne formant l'enveloppe 280 souple est globalement inférieure à celle de l'ouverture 230, de sorte que l'enveloppe 280 peut s'y déplacer par déformation (voir figure 14).

Le manchon 290 porte enfin, à l'arrière, au-delà de l'opercule 253 fermant la cavité 284, un joint d'étanchéité 285 en forme de lèvre (voir figure 14), similaire au joint d'étanchéité 185 du socle 100 du premier mode de réalisation précédemment décrit. Lors de la fixation de la boîte électrique par l'intermédiaire du conduit 250, une surface de pression 255 du conduit 250 est en appui indirect contre le support de réception 1, une partie de l'opercule 253 étant interposée, de manière compressible, entre ladite surface de pression 255 et le support de réception 1 (voir figure 14). Lors de cette fixation, le joint d'étanchéité 285 est comprimé contre le support de réception 1 et en épouse les défauts.

Comme le montre la figure 13, chaque conduit 250 se présente sous la forme d'un manchon globalement cylindrique dont la section présente un contour extérieur globalement circulaire et un contour intérieur globalement oblong. Le conduit 250 délimite intérieurement un des orifices spécifiques 206 à section globalement oblongue, destinés à recevoir la vis de fixation pour la fixation de la platine-support 10 au support de réception 1. A son extrémité avant, ce manchon est évasé pour délimiter le logement de réception de la tête de vis. L'extrémité avant du conduit 250 est en outre surmontée extérieurement d'une collerette 262, ici prévue à distance du bord avant dudit conduit 250. Le conduit 250 porte extérieurement des encoches 257, disposées symétriquement par rapport à la direction principale de l'oblong formé par la section de l'orifice spécifique 206 délimité par le conduit 250. Ces encoches 257 sont destinées à recevoir les dents d'accrochage 291 du manchon 290 lorsque le conduit 250 est rapporté dans ledit manchon 290 du socle 200 (voir figure 14). La section extérieure du conduit 250 est supérieure à celle de la cavité 284 délimitée par le manchon 290 de manière que lorsque le conduit 250 est rapporté dans la cavité 284 du manchon 290 du socle 200, une pression latérale permanente s'exerce entre le conduit 250 et le manchon 290. Cette pression permanente assure l'étanchéité entre ces deux pièces.

Plus précisément, comme le montre la figure 14, lorsque le conduit 250 est rapporté sur le socle 200, les dents d'accrochage 291 du manchon 290 se déforment jusqu'à venir mordre les encoches 257 du conduit 250, l'extrémité externe 252 du conduit 250 est alors en butée contre l'opercule 253 du manchon 290, et la collerette 262 du conduit 250 repose sur le bord avant de la couronne formant l'enveloppe 280 souple. L'enveloppe 280 souple est alors prise en sandwich entre, à l'avant, la collerette 262, et, à l'arrière, le trottoir 230B. La collerette 262 procure une meilleure résistance mécanique au conduit 250 et appuie sur l'enveloppe 280 souple pour la déformer lorsqu'un effort de fixation est exercé par le vissage de la vis de fixation 2 dans le conduit 250.

Cette déformation de l'enveloppe 280 souple autorise la translation de la surface de pression 255 du conduit 250 par rapport à la zone d'appui de la paroi de fond 202 de la platine-support 10.

Comme le montre la figure 14, il est ici prévu de rapporter à l'extrémité interne 251 du conduit 250, opposée à l'extrémité externe 252, un bouchon de protection 254. Le bouchon de protection 254, en général rapporté sur le conduit 250 après qu'une vis de fixation y a été insérée, renforce l'étanchéité de la boîte électrique et l'isolation électrique des éléments électriques logés dans cette boîte électrique. Pour maintenir ce bouchon de protection 254 en place, le bord avant du conduit 250 est ponctuellement muni de deux rebords 259 avec dents d'accrochage dirigés vers l'extérieur du conduit 250 (voir figures 13 et 14), symétriques par rapport à l'axe principal de l'oblong formé par l'orifice spécifique 206 que le conduit 250 délimite intérieurement. Ces deux rebords 259 sont destinés à retenir deux languettes 254A du bouchon de protection 254 (voir figure 14). Ici, le bouchon de protection 254 est réalisé en matériau souple, de type SEBS, de sorte qu'il se déforme pour permettre aux languettes 254A de s'accrocher derrière les rebords 259.

Enfin, comme le montre la figure 13, il est prévu sur le conduit 250 quatre pattes 260 faisant saillie radialement de la collerette 262. Chacune de ces pattes 260 est destinée à s'engager dans une rainure 231 longitudinale correspondante s'étendant d'avant en arrière le long de chaque ouverture 230 de la paroi de fond 202 (voir figure 12). Ces pattes 260 engagées dans les rainures 231 forment des crans anti-rotation du conduit 250 de sorte que lorsque la vis de fixation 2 est vissée dans le conduit 250, elle n'entraîne pas la rotation du conduit 250.

Pour le reste, la platine-support 10 de la boîte électrique selon le deuxième mode de réalisation de l'invention est en tout point identique à la platine-support 10 de la boîte électrique selon le premier mode de réalisation de l'invention.

On a représenté sur la figure 15 un troisième mode de réalisation de la boîte électrique conforme à l'invention. Ce troisième mode de réalisation est très semblable au deuxième mode de réalisation de la boîte électrique selon l'invention, notamment dans la mesure où un socle 300 de la platine-support 10 de la boîte électrique selon ce troisième mode de réalisation est moulé séparément de chaque conduit 350 de cette platine-support 10, où une enveloppe 380 souple appartient à une paroi de fond 302 dudit socle 300 de cette platine-support 10, et où chaque conduit 350 est rapporté sur la paroi de fond 302 par l'intermédiaire d'un manchon 390 prévu dans une ouverture de la paroi de fond 302 du socle 300, ledit manchon 390 portant l'enveloppe 380 souple. La seule différence avec le deuxième mode de réalisation réside dans le fait que les moyens d'accrochage réciproques entre le manchon 390 et le conduit 350 sont inversés. Plus précisément, comme le montre la figure 15, le conduit 350 du troisième mode de réalisation est muni de deux dents d'accrochage 357 destinées à s'accrocher dans des encoches 391 correspondantes prévues dans une cavité délimitée intérieurement par le manchon 390 de ce troisième mode de réalisation. A part cette différence, la platine-support 10 de la boîte électrique selon le troisième mode de réalisation est identique à la platine-support 10 de la boîte électrique selon le deuxième mode de réalisation. Notamment le manchon 390 forme d'une seule pièce l'enveloppe 380 souple, un joint d'étanchéité et un opercule déchirable (non visibles sur la figure 15).

Sur les figures 16 et 17, on a représenté un quatrième mode de réalisation de la boîte électrique conforme à l'invention. Ce quatrième mode de réalisation est analogue aux deuxième et troisième modes de réalisation de la boîte électrique selon l'invention, notamment dans la mesure où un socle 400 de la platine-support 10 de la boîte électrique selon ce quatrième mode de réalisation est moulé séparément de chaque conduit 450 de cette platine-support 10, où des ouvertures 430 sont prévus dans une paroi de fond 402 dudit socle 400 pour recevoir lesdits conduits 450, et où une enveloppe 480 souple s'interpose entre chaque conduit 450 et la paroi de fond 402 du socle 400 de cette platine support 10. La différence avec les deuxième et troisième modes de réalisation de la boîte électrique selon l'invention réside dans le fait que l'enveloppe 480 souple appartient cette fois au conduit 450, c'est-à-dire que l'enveloppe 480 souple est surmoulée avec le conduit 450 de manière à être d'une seule pièce avec ledit conduit 450.

Comme le montrent les figures 16 et 17, le conduit 450 est similaire aux conduits 250 ; 350 des deuxième et troisième modes de réalisation de la boîte électrique selon l'invention dans la mesure où il se présente sous la forme d'un manchon cylindrique, délimitant intérieurement un des orifices spécifiques 406 de section oblongue destinés à la fixation de la platine support 10, l'extrémité avant du conduit 450 étant surmonté d'une collerette 462 circulaire. Contrairement aux conduits 250 ; 350 des deuxième et troisième modes de réalisation de la boîte électrique selon l'invention, la paroi latérale du conduit 450 ne comporte ni dents d'accrochage, ni encoche pour sa fixation sur le socle 400 mais il est prévu un jonc 483 de retenu en matière souple, surmoulé à une extrémité externe 452 du conduit 450 et destiné à s'accrocher à la paroi de fond 402 du socle 400. Ce jonc 483 de retenu est ici globalement annulaire de section circulaire.

Comme le montre la figure 17, ce jonc 483 de retenu est destiné à s'accrocher derrière un trottoir 433 faisant saillie dans l'ouverture 430 de la paroi de fond 402 du socle 400 (voir figure 16) destinée à recevoir le conduit 450. Ce trottoir 433 borde ici la paroi délimitant cette ouverture 430 de réception du conduit 450 et s'étend globalement au tiers de la hauteur de cette paroi.

Comme le montre la figure 17, le bord libre du trottoir 433 de la paroi de fond 402 du socle 400 forme une pente de sorte que la section de l'ouverture 430 au niveau de la face avant du trottoir 433 est supérieure à la section de l'ouverture 430 au niveau de la face arrière du trottoir 433. En outre, le bord libre du trottoir 433 est tombant de sorte qu'il forme un rebord 435 (voir figures 16 et 17), derrière la face arrière duquel la face avant du jonc 483 est retenue lorsque le conduit 450 est rapporté dans l'ouverture 430.

Lorsque le conduit 450 est rapporté dans l'ouverture 430 de la paroi de fond 402 du socle 400, le bord libre du jonc 483 de retenu, de pente complémentaire à celle du bord libre du trottoir 433, glisse contre ledit bord libre du trottoir 433, de sorte que le jonc 483 de retenu est forcé de se rétracter vers l'intérieur du conduit 450 (voir figure 17). Une fois la protubérance du trottoir 433 passée, le jonc 483 de retenu reprend sa position initiale et sa face avant est alors retenue derrière la face arrière du rebord 435 du trottoir 433.

Selon ce quatrième mode de réalisation, l'assemblage du conduit 450 dans la paroi de fond 402 est facilité car la matière élastomère du jonc 483 de retenu glisse contre la matière plastique rigide de la paroi de fond 402 du socle 400.

Le bord arrière du jonc 483 forme un joint d'étanchéité 485 (voir figures 16 et 17) destiné à être comprimé contre le support de réception lors de la fixation de la boîte électrique par l'intermédiaire du conduit 450, à la manière du joint d'étanchéité des premier, deuxième et troisième modes de réalisation.

Selon ce quatrième mode de réalisation, il est prévu, une couronne cylindrique, de section circulaire (voir figure 16) qui s'étend vers l'arrière dans le prolongement de la collerette 462 du conduit 450 (voir figure 17). Cette couronne forme l'enveloppe 480 souple destinée à s'interposer entre le conduit 450 et la paroi de fond 402 du socle 400 pour autoriser le mouvement relatif de l'un par rapport à l'autre. Plus précisément, lorsque le conduit 450 est fixé dans l'ouverture 430, la couronne formant l'enveloppe 480 souple est prise en sandwich entre, à l'avant, la collerette 462 du conduit 450, et, à l'arrière, la face avant du trottoir 433 (voir figure 17) contre laquelle elle bute. La collerette 462 du conduit 450 permet d'appuyer sur la couronne formant l'enveloppe 480 souple pour la déformer lorsqu'un effort de vissage est exercé dans le conduit 450.

Comme dans les deuxième et troisième modes de réalisation de la boîte électrique selon l'invention, un opercule 453 déchirable ferme l'extrémité externe 452 du conduit 450 (voir figure 17). Lors de la fixation de la boîte électrique par l'intermédiaire du conduit 450, une surface de pression 455 du conduit 450 est en appui indirect contre le support de réception 1, une partie de l'opercule 453 étant interposée de manière compressible entre ladite surface de pression 455 et le support de réception 1.

Pour le reste, la platine-support 10 de la boîte électrique selon le quatrième mode de réalisation de l'invention est en tout point identique à la platine-support 10 de la boîte électrique selon les deuxième et troisième modes de réalisation de l'invention.

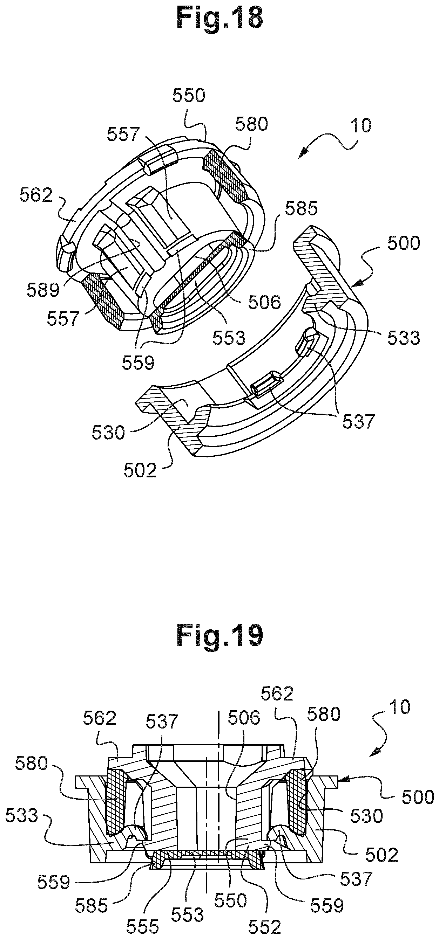

Sur les figures 18 et 19, on a représenté un cinquième mode de réalisation de la boîte électrique conforme à l'invention. Ce cinquième mode de réalisation est analogue au quatrième mode de réalisation notamment dans la mesure où un socle 500 de la platine-support 10 est moulé séparément de chaque conduit 550 de cette platine-support 10, où des ouvertures 530 sont prévues dans une paroi de fond 502 dudit socle 500 pour recevoir lesdits conduits 550, et où une enveloppe 580 souple appartient à chaque conduit 550 et s'interpose entre ledit conduit 550 et la paroi de fond 502 du socle 500. La différence avec le quatrième mode de réalisation réside dans le fait que les moyens d'accrochage réciproques entre le conduit 550 et la paroi de fond 502 du socle 500 sont portés par le conduit 550 lui-même.

Selon ce cinquième mode de réalisation, ce n'est pas un jonc de retenu bordant l'extrémité externe du conduit qui assure la liaison mécanique entre ledit conduit et le socle de la platine-support 10, mais le conduit 550 lui-même qui porte des moyens d'accrochage au socle 500 de la platine-support 10.

Plus précisément, comme le montre la figure 18, la paroi de fond 502 du socle 500 forme un trottoir 533 faisant saillie à l'intérieur de chaque ouverture 530 de manière à border, à l'arrière, ladite ouverture 530. Ce trottoir 533 porte des dents 537 de retenu faisant saillie radialement vers l'intérieur de l'ouverture 530. Chaque conduit 550 se présente quant à lui sous la forme d'un manchon globalement cylindrique, délimitant intérieurement un des orifices spécifiques 506 à section oblongue destinés à la fixation de la platine-support 10. Des encoches 557 longitudinales sont prévues sur la face externe de la paroi latérale du conduit 550. Des rebords 559 disposés à l'arrière dudit conduit 550 arrêtent chacune de ces encoches 557 longitudinales.

Ainsi, lorsque le conduit 550 est introduit dans l'ouverture 530 correspondante du socle 500, les rebords 559 du conduit 550 appuient sur les dents 537 de retenu du trottoir 533 et les forcent à ployer vers l'arrière pour laisser le passage audit conduit 550. Lorsque chaque rebord 559 a dépassé chaque dent 537 de retenu, chaque dent 537 de retenu reprend sa position initiale de sorte que la face avant de chaque rebord 559 est retenue derrière la face arrière de la dent 537 de retenu correspondante, empêchant ainsi le déplacement du conduit 550 vers l'avant (voir figure 19).

Pour le reste, comme dans le quatrième mode de réalisation, l'extrémité avant du conduit 550 est surmontée extérieurement d'une collerette 562 dans le prolongement arrière de laquelle s'étend une couronne formant l'enveloppe 580 souple (voir figure 19). Ainsi, comme dans le quatrième mode de réalisation, l'enveloppe 580 souple est surmoulée avec le conduit 550 de manière à être d'une seule pièce avec ledit conduit 550. Lorsque le conduit 550 est monté dans le socle 500, l'enveloppe 580 souple est prise en sandwich entre, à l'avant, la collerette 562 du conduit 550, et, à l'arrière, la face avant du trottoir 533 (voir figure 19). La collerette 562 du conduit 550 permet d'appuyer sur la couronne formant l'enveloppe 580 souple pour la déformer lorsqu'un effort de vissage est exercé dans le conduit 550. Les encoches 557 longitudinales prévues sur la face externe de la paroi latérale du conduit 550 autorisent un déplacement des dents 537 de retenu du trottoir 533 de manière à ne pas entraver le déplacement dudit conduit 550 lors de la déformation de l'enveloppe 580 souple par effort de serrage. En outre, la section annulaire de l'enveloppe 580 souple est supérieure à celle de l'ouverture 530 prévue dans la paroi de fond 502 du socle 500, de manière qu'une pression latérale permanente s'exerce entre l'enveloppe 580 souple et la paroi de fond 502. Cette pression latérale permanente assure l'étanchéité de la boîte électrique en empêchant l'humidité de pénétrer à l'intérieur de la boîte électrique via l'ouverture 530.

Comme le montre la figure 19, une extrémité arrière 552 du conduit 550 est fermée par un opercule déchirable 553. Lors de la fixation de la boîte électrique par l'intermédiaire du conduit 550, la surface de pression 555 du conduit 550 est en appui indirect contre le support de réception 1, une partie de l'opercule 553 étant interposée de manière compressible entre ladite surface de pression 555 et le support de réception 1. L'opercule 553 est bordé, à l'arrière, par un joint d'étanchéité 585 en forme de lèvre (voir figures 18 et 19), similaire au joint d'étanchéité 185 du socle 100 de la boîte électrique selon le premier mode de réalisation précédemment décrit.

Pour le reste, la platine-support 10 de la boîte électrique selon le cinquième mode de réalisation de l'invention est en tout point identique à la platine-support 10 de la boîte électrique selon le quatrième mode de réalisation de l'invention.

Dans les deuxième, troisième, quatrième et cinquième modes de réalisation, on a considéré que seuls deux des orifices spécifiques de fixation de la platine-support étaient formés par deux conduits séparés de la paroi de fond du socle par une enveloppe souple formant un système de compensation des défauts de planéité du support de réception. Bien entendu, il est tout à fait envisageable de prévoir que chaque orifice spécifique, notamment les quatre orifices spécifiques, soit formé par un conduit muni d'un tel système de compensation.

Dans les deuxième, troisième, quatrième et cinquième modes de réalisation de la boîte électrique selon l'invention, le joint d'étanchéité 285 ; 385 ; 485, l'opercule 253; 353 ; 453 déchirable et l'enveloppe 280; 380 ; 480 souple sont formés d'une seule pièce. On voit d'ailleurs, d'une part, sur la figure 17 les liens 489 en matière souple matérialisant le passage utilisé pour le remplissage du moule lors du surmoulage de ces pièces sur le conduit 450, et, d'autre part, sur la figure 18 l'emplacement 589 prévu sur le conduit 550 pour ce passage de matière lors du surmoulage. En variante, on pourrait envisager que chacun de ces éléments (enveloppe souple, opercule déchirable et joint d'étanchéité) soient des pièces distinctes rapportées ou surmoulées séparément sur le socle et/ou sur chaque conduit de la platine-support.

Sur les différentes figures, la boîte électrique présente une section de forme carrée et elle définit un unique poste permettant d'accueillir un ou deux mécanismes d'appareillage électrique : on dit qu'il s'agit d'une boîte monoposte.

En variante, il pourrait s'agir d'une boîte multiposte, présentant une section de forme rectangulaire et définissant deux ou trois postes. Dans cette variante, la boîte électrique comportera de préférence un cadre définissant plusieurs ouvertures, chacune étant destinée à recevoir un poste.

## Revendications

1. Boîte électrique (1000) réalisée en matière plastique rigide comprenant une paroi de fond (102 ; 202 ; 302 ; 402 ; 502) destinée à être fixée sur un support de réception (1), cette paroi de fond (102 ; 202 ; 302 ; 402 ; 502) présentant sur une face externe (102B) au moins une zone d'appui (120) sur ledit support de réception (1) et étant traversée d'au moins un conduit (150; 250 ; 350 ; 450 ; 550) destiné à accueillir un élément de fixation (2) audit support de réception (1), chaque conduit (150 ; 250 ; 350 ; 450 ; 550) présentant à une extrémité externe (152 ; 252 ; 452 ; 552), une surface de pression (155 ; 255 ; 455 ; 555) sur ledit support de réception (1),
**caractérisée en ce qu'**elle comporte au moins une enveloppe (180; 280; 380; 480; 580) en matière souple entourant chaque conduit (150 ; 250 ; 350 ; 450 ; 550) de sorte que l'enveloppe (180 ; 280 ; 380 ; 480 ; 580) s'interpose entre ladite paroi de fond (102 ; 202 ; 302 ; 402 ; 502) et ledit conduit (150 ; 250 ; 350 ; 450 ; 550) pour autoriser un mouvement relatif de translation de la surface de pression (155 ; 255 ; 455 ; 555) de chaque conduit (150 ; 250 ; 350 ; 450 ; 550) par rapport à chaque zone d'appui (120) de la paroi de fond (102 ; 202 ; 302 ; 402 ; 502), sans engendrer de contrainte mécanique déformant ladite paroi de fond (102 ; 202 ; 302 ; 402 ; 502).

2. Boîte électrique (1000) selon la revendication 1, dans laquelle chaque enveloppe (180 ; 280 ; 380 ; 480 ; 580) est réalisée en matériau élastomère.

3. Boîte électrique (1000) selon l'une des revendications 1 à 2, dans laquelle il est prévu le long du bord périphérique de la face externe (102B) de la paroi de fond (102) une jupe (125) formant une surface d'appui sur le support de réception (1).

4. Boîte électrique (1000) selon l'une des revendications 1 à 3, dans laquelle la face externe (102B) de la paroi de fond (102) forme au moins un relief dont une zone constitue ladite zone d'appui (120) de la paroi de fond (102), la surface de pression (155) de chaque conduit (150) étant située en retrait de cette zone d'appui (120) avant fixation de la boîte électrique.

5. Boîte électrique (1000) selon l'une des revendications 1 à 4, dans laquelle il est prévu au moins deux conduits (150 ; 250 ; 350 ; 450 ; 550) d'accueil d'éléments de fixation (2) disposés de manière symétrique par rapport au centre de la paroi de fond (102 ; 202 ; 302 ; 402 ; 502) de la boîte électrique (1000).

6. Boîte électrique (1000) selon la revendication 5, dans laquelle chacun des deux conduits (150 ; 250 ; 350 ; 450 ; 550) délimite intérieurement un orifice spécifique (106; 206 ; 406 ; 506) de section oblongue, les directions principales de ces sections oblongues étant orientées à 90° l'une de l'autre.

7. Boîte électrique (1000) selon l'une des revendications 1 à 6, dans laquelle il est prévu un joint d'étanchéité (185 ; 285 ; 485 ; 585) en matière souple s'étendant à partir de la surface de pression (155 ; 255 ; 455 ; 555) du conduit (150 ; 250 ; 450 ; 550) et apte à être compressé contre ledit support de réception (1) lors de la fixation de la boîte électrique.

8. Boîte électrique (1000) selon l'une des revendications 1 à 7, dans laquelle chaque conduit (150 ; 250 ; 450 ; 550) est fermé à son extrémité externe (152 ; 252 ; 452 ; 552) par un opercule (153 ; 253 ; 453 ; 553) en matériau déchirable.

9. Boîte électrique (1000) selon l'une des revendications 7 et 8 ; dans laquelle l'enveloppe (180 ; 280 ; 480 ; 580), le joint d'étanchéité (185 ; 285 ; 485 ; 585) et l'opercule (153 ; 253 ; 453 ; 553) sont moulés d'une seule pièce en matière élastomère.

10. Boîte électrique (1000) selon l'une des revendications 1 à 9, dans laquelle il est prévu de rapporter à une extrémité interne (251) du conduit (250), opposée à ladite extrémité externe (252) dudit conduit (250), un bouchon de protection (254).

11. Boîte électrique (1000) selon l'une des revendications 1 à 10, dans laquelle chaque enveloppe (180) est surmoulée sur le conduit (150) correspondant et la paroi de fond (102).

12. Boîte électrique (1000) selon l'une des revendications 1 à 10, dans laquelle chaque conduit (250 ; 350 ; 450 ; 550) est rapporté sur la paroi de fond (202 ; 302 ; 402 ; 502).

13. Boîte électrique (1000) selon la revendication 12, dans laquelle chaque enveloppe (280 ; 380) appartient à la paroi de fond (202 ; 302).

14. Boîte électrique (1000) selon la revendication 12, dans laquelle chaque enveloppe (480 ; 580) appartient au conduit (450 ; 550).

15. Boîtier comportant une boîte électrique (1000) selon l'une des revendications 1 à 14, dans lequel il est prévu un enjoliveur (4A, 4B) à rapporter à l'avant de ladite boîte électrique (1000).

16. Appareillage électrique comprenant un mécanisme d'appareillage (3A, 3B) et un enjoliveur (4A, 4B), **caractérisé en ce qu'**il comporte une boîte électrique (1000) selon l'une des revendications 1 à 14 à l'intérieur de laquelle est fixé le mécanisme d'appareillage (3A, 3B) et à l'avant de laquelle est fixé l'enjoliveur (4A, 4B).

## Patentansprüche

1. Elektrokasten (1000) aus steifem Kunststoffmaterial mit einer Bodenwand (102; 202; 302; 402; 502), die dazu bestimmt ist, an einem Aufnahmeträger (1) befestigt zu werden, wobei diese Bodenwand (102; 202; 303; 402; 502) auf einer Außenseite (102B) mindestens eine Zone (120) für den Andruck an den Aufnahmeträger (1) aufweist und von mindestens einer Durchbrechung (150; 250; 350; 450; 550) durchquert wird, die dazu bestimmt ist, ein Element (2) für die Befestigung am Aufnahmeträger (1) aufzunehmen, wobei jede Durchbrechung (150; 250; 350; 450; 550) an einem äußeren Ende (152; 252; 452; 552) eine Fläche (155; 255; 455; 555) für den Andruck an den Aufnahmeträger (1) aufweist, **dadurch gekennzeichnet, daß** er mindestens eine Hülle (180; 280; 380; 480; 580) aus weichem Material aufweist, die jede Durchbrechung (150; 250; 350; 450; 550) umgibt, so daß sich die Hülle (180; 280; 380; 480; 580) zwischen der Bodenwand (102; 202; 303; 402; 502) und der Durchbrechung (150; 250; 350; 450; 550) befindet, um eine relative Translationsbewegung der Andruckfläche (155; 255; 455; 555) jeder Durchbrechung (150; 250; 350; 450; 550) gegenüber jeder Andruckzone (120) der Bodenwand (102; 202; 302; 402; 502) zu ermöglichen, ohne eine mechanische Belastung zu erzeugen, die die Bodenwand (102; 202; 302; 402; 502) verformt.

2. Elektrokasten (1000) gemäß Anspruch 1, wobei jede Hülle (180; 280; 380; 480; 580) aus einem Elastomermaterial gefertigt ist.

3. Elektrokasten (1000) gemäß einem der Ansprüche 1 bis 2, wobei entlang des umlaufenden Rands der Außenseite (102B) der Bodenwand (102) eine Umhüllung (125) vorgesehen ist, die eine Fläche für den Andruck an den Aufnahmeträger (1) bildet.

4. Elektrokasten (1000) gemäß einem der Ansprüche 1 bis 3, wobei die Außenseite (102B) der Bodenwand (102) mindestens ein Relief bildet, vom dem eine Zone die Andruckzone (120) der Bodenwand (102) bildet, wobei die Andruckfläche (155) jeder Durchbrechung (150) vor der Befestigung des Elektrokastens gegenüber der Andruckzone (120) zurückgesetzt ist.

5. Elektrokasten (1000) gemäß einem der Ansprüche 1 bis 4, wobei mindestens zwei Durchbrechungen (150; 250; 350; 450; 550) zur Aufnahme von Befestigungselementen (2) vorgesehen sind, die in Bezug auf die Mitte der Bodenwand (102; 202; 303; 402; 502) des Elektrokastens (1000) symmetrisch angeordnet sind.

6. Elektrokasten (1000) gemäß Anspruch 5, wobei jede der beiden Durchbrechungen (150; 250; 350; 450; 550) innen ein spezifisches Loch (106; 206; 406; 506) mit länglichem Querschnitt begrenzt, wobei die Hauptrichtungen dieser länglichen Querschnitte um 90° zueinander versetzt sind.

7. Elektrokasten (1000) gemäß einem der Ansprüche 1 bis 6, wobei ein Dichtring (185; 285; 485; 585) aus weichem Material vorgesehen ist, der sich von der Andruckfläche (155; 255; 455; 555) der Durchbrechung (150; 250; 450; 550) aus erstreckt und geeignet ist, bei der Befestigung des Elektrokastens gegen den Aufnahmeträger (1) komprimiert zu werden.

8. Elektrokasten (1000) gemäß einem der Ansprüche 1 bis 7, wobei jede Durchbrechung (150; 250; 450; 550) an ihrem äußeren Ende (152; 252; 452; 552) durch einen Deckel (153; 253; 453; 553) aus zerreißbarem Material verschlossen ist.

9. Elektrokasten (1000) gemäß einem der Ansprüche 7 und 8, wobei die Hülle (180; 280; 480; 580), der Dichtring (185; 285; 485; 585) und der Deckel (153; 253; 453; 553) in einem Stück aus einem Elastomermaterial geformt sind.

10. Elektrokasten (1000) gemäß einem der Ansprüche 1 bis 9, wobei vorgesehen ist, an einem zum äußeren Ende (252) der Durchbrechung (250) entgegengesetzten inneren Ende (251) der Durchbrechung (250) einen Schutzstopfen (254) einzusetzen.

11. Elektrokasten (1000) gemäß einem der Ansprüche 1 bis 10, wobei jede Hülle (180) auf die entsprechende Durchbrechung (150) und die Bodenwand (102) aufgeformt ist.

12. Elektrokasten (1000) gemäß einem der Ansprüche 1 bis 10, wobei jede Durchbrechung (250; 350; 450; 550) auf die Bodenwand (202; 302; 402; 502) aufgebracht ist.

13. Elektrokasten (1000) gemäß Anspruch 12, wobei jede Hülle (280; 380) zur Bodenwand 202; 302) gehört.

14. Elektrokasten (1000) gemäß Anspruch 12, wobei jede Hülle (280; 380) zur Durchbrechung (450; 550) gehört.

15. Elektrokasten (1000) gemäß einem der Ansprüche 1 bis 14, wobei eine auf die Vorderseite des Elektrokastens (1000) aufzusetzendes Zierelement (4A, 4B) vorgesehen ist.

16. Elektrisches Gerät mit einem Gerätemechanismus (3A, 3B) und einem Zierelement (4A, 4B), **dadurch gekennzeichnet, daß** es einen Elektrokasten (1000) gemäß einem der Ansprüche 1 bis 14 aufweist, im Inneren dessen der Gerätemechanismus (3A, 3B) befestigt ist und auf der Vorderseite dessen das Zierelement (4A, B) befestigt ist.

## Claims

1. An electrical box (1000) made of a rigid plastic substance comprising a bottom wall (102; 202; 302; 402; 502) intended to be attached to a receiving support (1), the bottom wall (102; 202; 302; 402; 502) having on an outer face (102B) at least one bearing area (120) on said receiving support (1) and being traversed by at least one duct (150; 250; 350; 450; 550) intended to receive a fastener (2) to said receiving support (1), each duct (150; 250; 350; 450; 550) having at an outer end (152; 252; 452; 552) a pressure surface (155; 255; 455; 555) on said receiving support (1),
**characterised in that** it comprises at least one envelope (180; 280; 380; 480; 580) made of a flexible substance surrounding each duct (150; 250; 350; 450; 550) such that the envelope (180; 280; 380; 480; 580) is interposed between said bottom wall (102; 202; 302; 402; 502) and said duct (150; 250; 350; 450; 550) to allow a relative translational movement of the pressure surface (155; 255; 455; 555) of each duct (150; 250; 350; 450; 550) relative to each bearing area (120) of the bottom wall (102; 202; 302; 402; 502), without causing any mechanical stress deforming said bottom wall (102; 202; 302; 402; 502).

2. The electrical box (1000) according to Claim 1, wherein each envelope (180; 280; 380; 480; 580) is made of an elastomeric material.

3. The electrical box (1000) according to any one of Claims 1 to 2, wherein a skirt (125) forming a bearing surface on the receiving support (1) is provided along the peripheral edge of the outer face (102B) of the bottom wall (102).

4. The electrical box (1000) according to any one of Claims 1 to 3, wherein the outer face (102B) of the bottom wall (102) forms at least one portion in relief, a zone of which constitutes said bearing area (120) of the bottom wall (102), the pressure surface (155) of each duct (150) being located in a position that is set back from said bearing area (120) before the electrical box is attached.

5. The electrical box (1000) according to any one of Claims 1 to 4, wherein at least two ducts (150; 250; 350; 450; 550) are provided for receiving fasteners (2) arranged symmetrically relative to the centre of the bottom wall (102; 202; 302; 402; 502) of the electrical box (1000).

6. The electrical box (1000) according to Claim 5, wherein each of the two ducts(150; 250; 350; 450; 550) internally delimits a specific orifice (106; 206; 406; 506) of oblong section, the main directions of these oblong sections being orientated at 90° to each other.

7. The electrical box (1000) according to any one of Claims 1 to 6, wherein a seal (185; 285; 485; 585) is provided, made of a flexible substance extending from the pressure surface (155; 255; 455; 555) of the duct (150; 250; 450; 550) and capable of being compressed against said receiving support (1) when the electrical box is attached.

8. The electrical box (1000) according to any one of Claims 1 to 7, wherein each duct (150; 250; 450; 550) is closed at its outer end (152; 252; 452; 552) by a cover (153; 253; 453; 553) of tearable material.

9. The electrical box (1000) according to any one of Claims 7 or 8, wherein the envelope (180; 280; 480; 580), the seal (185; 285; 485; 585), and the cover (153; 253; 453; 553) are integrally moulded as a single piece from an elastomeric substance.

10. The electrical box (1000) according to any one of Claims 1 to 9, wherein a protective cap (254) is provided at an inner end (251) of the duct (250) opposite said outer end (252) of said duct (250).

11. The electrical box (1000) according to any one of Claims 1 to 10, wherein each envelope (180) is overmoulded onto the corresponding duct (150) and the bottom wall (102).

12. The electrical box (1000) according to any one of Claims 1 to 10, wherein each duct (250; 350; 450; 550) is attached to the bottom wall (202; 302; 402; 502).

13. The electrical box (1000) according to Claim 12, wherein each envelope (280; 380) belongs to the bottom wall (202; 302).

14. The electrical box (1000) according to Claim 12, wherein each envelope (480; 580) belongs to the duct (450; 550) .

15. The housing comprising an electrical box (1000) according to any one of Claims 1 to 14, wherein a trim plate (4A, 4B) is provided to be fitted to the front of said electrical box (1000).

16. The electrical equipment comprising an equipment mechanism (3A, 3B) and a trim plate (4A, 4B), **characterised in that** it comprises an electrical box (1000) according to any one of claims 1 to 14, into which the equipment mechanism (3A, 3B) is attached, and to the front of which the trim plate (4A, 4B) is attached.
